# EUROPEAN PATENT SPECIFICATION

(11) **EP 2 835 718 B1**
(45) Date of publication and mention of the grant of the patent: **07.06.2017**
(21) Application number: 14169781.3
(22) Date of filing: 26.05.2014
(51) Int. Cl.: G06F 3/01, G06F 3/0483

(54) **Perusing determination device, perusing determination method**
Durchlesebestimmungsvorrichtung, Durchlesebestimmungsverfahren
Dispositif et méthode de détermination de lecture attentive

(30) Priority: 06.08.2013 JP 2013163644
(43) Date of publication of application: 11.02.2015
(73) Proprietor: FUJITSU LIMITED, Kawasaki-shi, Kanagawa 211-8588 (JP)
(72) Inventor: Nakashima, Satoshi, Kawasaki-shi, Kanagawa 211-8588 (JP); Taguchi, Akinori, Kawasaki-shi, Kanagawa 211-8588 (JP); Mihara, Motonobu, Kawasaki-shi, Kanagawa 211-8588 (JP)
(74) Representative: Lewin, David Nicholas

(56) References cited:
- US-B2- 8 136 944
- KEITH RAYNER: "Eye movements in reading and information processing: 20 years of research.", PSYCHOLOGICAL BULLETIN, vol. 124, no. 3, 1 January 1998 (1998-01-01), pages 372-422, XP055141866, ISSN: 0033-2909, DOI: 10.1037//0033-2909.124.3.372
- KEITH RAYNER ET AL: "Lexical complexity and fixation times in reading: Effects of word frequency, verb complexity, and lexical ambiguity", MEMORY & COGNITION, vol. 14, no. 3, 1 May 1986 (1986-05-01), pages 191-201, XP055141869, ISSN: 0090-502X, DOI: 10.3758/BF03197692
- Ben Vega ET AL: "Reading into the Text: Investigating the Influence of Text Complexity on Cognitive Engagement", , 7 June 2013 (2013-06-07), XP055141872, Retrieved from the Internet: URL:http://www.educationaldatamining.org/E DM2013/papers/rn_paper_51.pdf [retrieved on 2014-09-22]
- CHRISTOPHER S. CAMPBELL ET AL: "A robust algorithm for reading detection", PROCEEDINGS OF THE 2001 WORKSHOP ON PERCETIVE USER INTERFACES , PUI '01, 1 January 2001 (2001-01-01), page 1, XP055141879, New York, New York, USA DOI: 10.1145/971478.971503
- GEORG BUSCHER ET AL: "Attentive documents: Eye Tracking as Implicit Feedback for Information Retrieval and Beyond", ACM TRANSACTIONS ON INTERACTIVE INTELLIGENT SYSTEMS, vol. 1, no. 2, 1 January 2012 (2012-01-01) , pages 1-30, XP055141880, ISSN: 2160-6455, DOI: 10.1145/2070719.2070722
- RALF BIEDERT ET AL: "A robust realtime reading-skimming classifier", PROCEEDINGS OF THE SYMPOSIUM ON EYE TRACKING RESEARCH AND APPLICATIONS, ETRA '12, 1 January 2012 (2012-01-01), page 123, XP055141883, New York, New York, USA DOI: 10.1145/2168556.2168575 ISBN: 978-1-45-031221-9

## Description

### FIELD

The embodiments discussed herein are related to, for example, a perusing determination device, a perusing determination method, and a perusing determination program.

### BACKGROUND

Up until recently, various pieces of information including character information have been created as digital data. For example, there has been increased an opportunity to read an electronic document such as an electronic book and a document file through a monitor. In addition, for example, there also has been increased an opportunity to read, on a monitor, a document that is desired to be perused and includes a content to be grasped correctly such as a business e-mail, a procedure manual, and an instruction manual.

On the other hand, recently, a technology has been desired by which it may be automatically determined whether or not a user peruses an electronic document. For example, in Japanese Laid-open Patent Publication No. 2006-107048, a method of detecting order in which a user has referred to parts that are included in an electronic document, based on a direction of the user's gaze has been discussed.

However, in the related art, it may be determined whether or not the user has referred to the parts that are included in the document in correct order, but it is difficult to accurately determine whether or not the user has perused the electronic document (whether or not the user has not skimmed the electronic document). Reference may be made to US-B2-8136944 which discloses a system and method for identifying the existence and position of text in visual media content and for determining a subject's interactions with the text.

An object of the embodiments discussed herein is to provide a perusing determination device, a perusing determination method, and a perusing determination program by which it may be accurately determined whether or not a user has perused a document.

### SUMMARY

The present invention is defined by the independent claims to which reference should now be made. Specific embodiments are defined by the dependent claims.

The object and advantages of the invention will be realized and attained by means of the elements and combinations particularly pointed out in the claims. It is to be understood that both the foregoing general description and the following detailed description are exemplary and explanatory and are not restrictive of the invention, as claimed.

In the perusing determination device, the perusing determination method, and the perusing determination program according to the embodiments discussed herein, it may be accurately determined whether or not a user has perused a document.

### BRIEF DESCRIPTION OF DRAWINGS

These and/or other aspects and advantages will become apparent and more readily appreciated from the following description of the embodiments, taken in conjunction with the accompanying drawing of which:
FIG. 1 is a schematic diagram illustrating a structure of an information processing system according to an embodiment;
FIG. 2 is a diagram illustrating a hardware structure of an information processing device illustrated in FIG. 1;
FIG. 3 is a functional block diagram illustrating the information processing device illustrated in FIG. 1;
FIG. 4 is a diagram illustrating an example of an electronic document that is displayed on a display;
FIG. 5 is a flowchart illustrating an example of processing of an eye tracking unit and a reading time acquisition unit;
FIG. 6 is a diagram illustrating an example of a reading time variance DB;
FIG. 7 is a flowchart illustrating an example of processing of a tendency calculation unit;
FIG. 8A is a diagram illustrating an example of a specific word table;
FIG. 8B is a diagram illustrating an example of a specific word occurrence number DB;
FIG. 9 is a flowchart illustrating an example of processing of a determination unit;
FIG. 10A is a diagram illustrating an example of a relative frequency table of reading time;
FIG. 10B is a diagram illustrating an example of a relative frequency table of specific words; and
FIG. 11 is a diagram illustrating an example of a modification of the relative frequency table of specific words.

### DESCRIPTION OF EMBODIMENTS

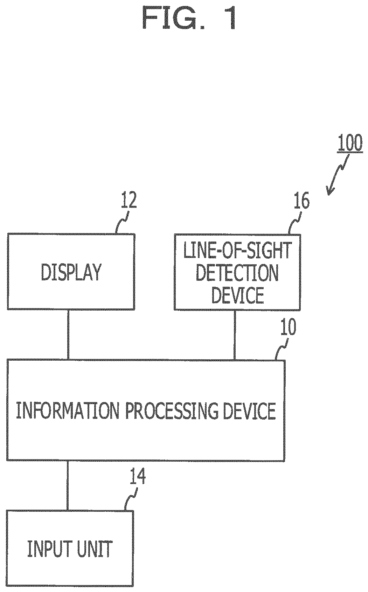

An information processing system according to an embodiment is described below with reference to FIGs. 1 to 6. In FIG. 1, a structure of an information processing system 100 according to the embodiment is schematically illustrated.

The information processing system 100 includes an information processing device 10 as a perusing determination device, a display 12, an input unit 14, and a line-of-sight detection device 16. The information processing device 10 displays a content and a document on the display 12 in response to an instruction from the user, and executes processing and the like of determining whether or not the user has perused the content and the document, by obtaining a detection result of the line-of-sight detection device 16. The detailed structure and processing of the information processing device 10 are described later.

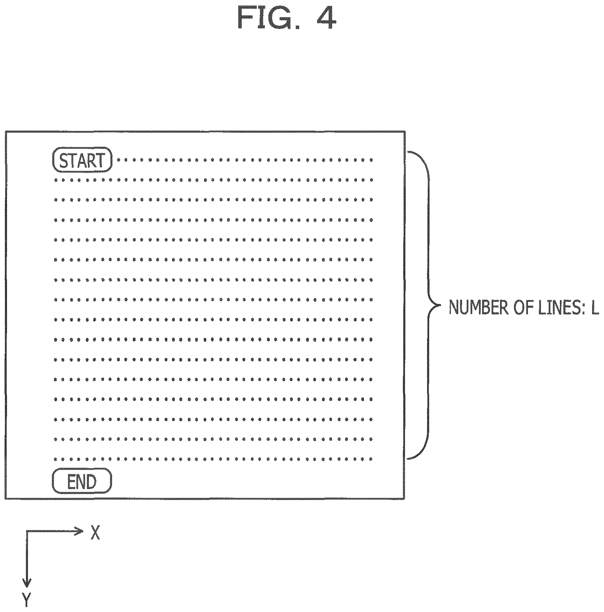

The display 12 includes a liquid crystal display, and displays the content, the document, and the like in response to an instruction from the information processing device 10. In the embodiment, as an example, a case is described in which an electronic document having a layout as illustrated in FIG. 4 is displayed on the display 12. The electronic document in FIG. 4 is a document that includes L horizontal lines, and is, for example, a document such as a business e-mail, a procedure manual, an instruction manual, a consent agreement, or the like. In addition, it is assumed that a start button is arranged at the upper left of the electronic document, and an end button is arranged at the lower left of the electronic document. The display 12 may include a plurality of displays (multi-display).

The input unit 14 includes a keyboard, a mouse, a touch-screen, and the like, and receives an input from the user.

The line-of-sight detection device 16 includes a near-infrared lighting (light emitting diode (LED)) and a camera, and is a device that detects a line-of-sight direction in a noncontact manner by a corneal reflection method. The line-of-sight detection device 16 is provided in a part of or in the vicinity of the display 12, and may detect a position in the display 12 to which the line-of-sight of the user who sees the display 12 is directed. The line-of-sight detection device 16 may detect the line-of-sight direction of the user by a method other than the corneal reflection method.

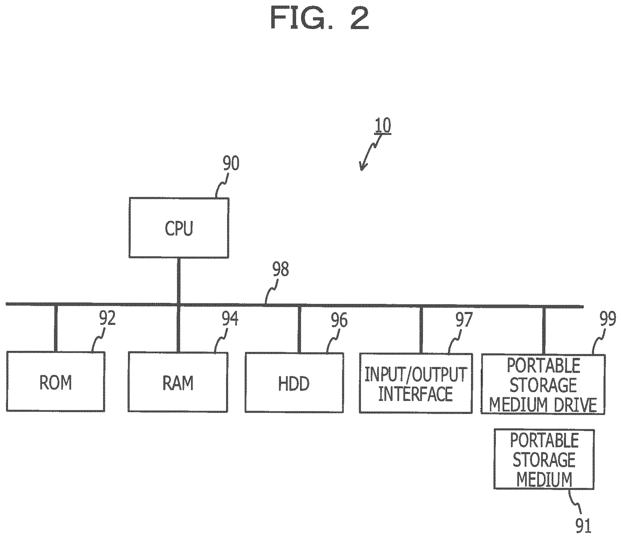

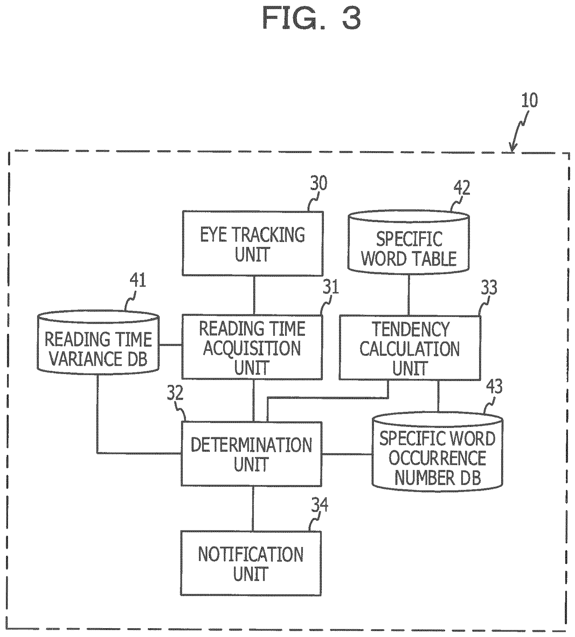

In FIG. 2, a hardware structure of the information processing device 10 is illustrated. As illustrated in FIG. 2, the information processing device 10 includes a central processing unit (CPU) 90, a read-only memory (ROM) 92, a random access memory (RAM) 94, a storage unit (here, a hard disk drive (HDD)) 96, an input/output interface 97, and a portable storage medium drive 99, and each of the configuration units in the information processing device 10 is connected to a bus 98. In the information processing device 10, a program that includes a perusing determination program and is stored in the ROM 92 or the HDD 96, or a program that includes the perusing determination program and is read from a portable storage medium 91 by the portable storage medium drive 99 is executed by the CPU 90, so that a function of each unit in FIG. 3 is achieved.

In FIG. 3, a functional block diagram of the information processing device 10 is illustrated. As illustrated in FIG. 3, in the information processing device 10, the CPU 90 executes the program, so that functions as an eye tracking unit 30, a reading time acquisition unit 31, the tendency calculation unit 33, the determination unit 32, and the notification unit 34 are achieved. In this regard, a reading time variance DB 41, a specific word table 42, and a specific word occurrence number DB 43, which are stored in the HDD 96 and the like are also illustrated in FIG. 3.

The eye tracking unit 30 calculates time variation of a line-of-sight position, that is detected by the line-of-sight detection device 16. That is, the eye tracking unit 30 detects a direction in which the line-of-sight of the user moves on the electronic document (FIG. 4).

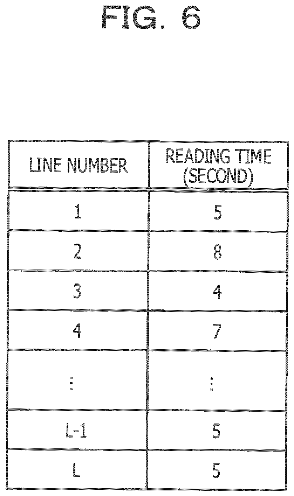

The reading time acquisition unit 31 measures a reading time that is a time period from when a return sweep of a user' s line-of-sight has occurred to when the next return sweep of the user' s line-of-sight occurred (a word viewing time to read one line) and then stores the measured reading time of each line into the reading time variance DB 41. Note that the reading time variance DB 41 has a data structure as illustrated in FIG. 6. Specifically, the reading time variance DB 41 has fields of a line number and a reading time (unit: second).

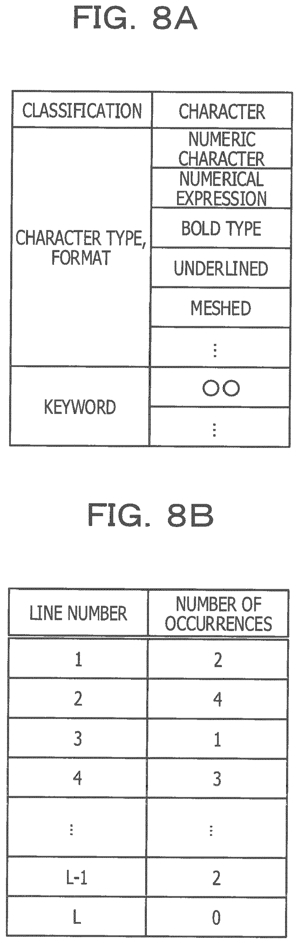

The tendency calculation unit 33 refers to the specific word table 42, and obtains how many specific words that are defined in the specific word table 42 (refer to FIG. 8A) are included in each line of the electronic document, and stores the acquisition result into the specific word occurrence number DB 43 (refer to FIG. 8B). In this regard, the specific word table 42 has characters including difficult words, which may change (or reduce) the movement speed of the user's line-of-sight. Specifically, the specific word table 42 stores a numeric character, a numerical expression, a bold type, underlined, meshed, and the like as a character type and a format, and stores difficult words as keywords. Also, the specific word occurrence number DB 43 has fields of the line number and the number of occurrences. In this regard, the number of occurrences of the specific words is a factor influencing reading time of each line.

The determination unit 32 refers to the reading time variance DB 41 and the specific word occurrence number DB 43, and determines whether the user has perused the electronic document or not. The notification unit 34 notifies the user of the determination result of the determination unit 32.

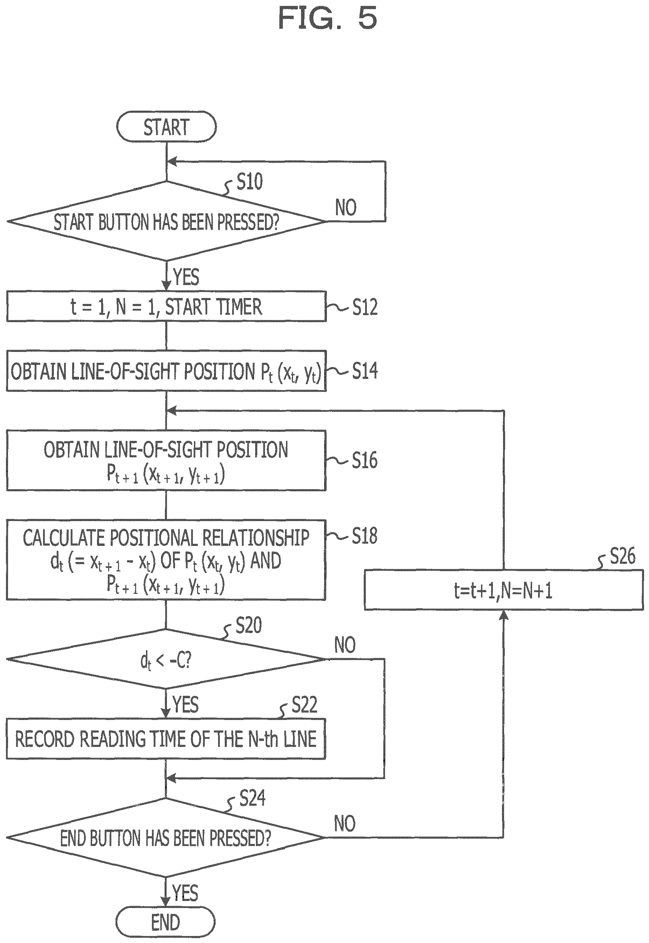

Processing by the information processing device 10 according to the present embodiment is described in detail below with reference to the flowchart of FIGs. 5, 7, and 9. As a precondition that the processing is started, it is assumed that the electronic document in FIG. 4 is displayed on the display 12, and the user sees the display 12. In this regard, in the present embodiment, it is assumed that the number of characters in each line is fixed in order to make it easy to understand.

Here, when a user reads an electronic document in order to understand the contents thereof, if the document includes difficult words, reading speed becomes slow compared with the case of a simple document. Accordingly, it is thought that variation (variance) occurs in reading time of each line depending on the existence or absence (the number of) difficult words in the document. On the other hand, when the user skims through an electronic document, reading speed of each line is generally the same, and substantially no variation occurs in reading time of each line. In the present embodiment, a determination is made of whether the user has perused the electronic document or not from such a characteristic of reading time.

### [Processing of the eye tracking unit 30 and the reading time acquisition unit 31]

FIG. 5 illustrates a flowchart of the processing of the eye tracking unit 30 and the reading time acquisition unit 31. In the processing in FIG. 5, first, in step S10, the eye tracking unit 30 waits until the user presses the start button through the input unit 14. In step S10, the eye tracking unit 30 may wait until the user performs a certain trigger operation instead of the pressing of the start button. As the certain trigger operation, there is an operation in which the user fixes the eyes on a certain position and an operation that is related on the line-of-sight such as wink. In addition, the eye tracking unit 30 may wait until utterance of certain voice by the user is detected using the microphone. The eye tracking unit 30 is started up after an input from the user through the input unit 14 is accepted, and may wait until a certain operation is detected in step S10. Alternatively, the eye tracking unit 30 may typically be running. When the eye tracking unit 30 is typically running, prediction of a line-of-sight position using previous line-of-sight information allows a case in which line-of-sight is not detected due to wink at a time of the trigger operation, and the like to be dealt with.

When "Yes" is determined in step S10, in next step S12, the eye tracking unit 30 sets a value t that indicates a serial number of a line-of-sight position at 1, and sets a value N that indicates the number of lines at 1, and starts the timer.

After that, in step S14, the eye tracking unit 30 obtains a line-of-sight position Pₜ(xₜ, yₜ) (here, P₁ (x₁, y₁)) on the screen of the display 12 from the line-of-sight detection device 16.

After that, in step S16, the eye tracking unit 30 obtains a line-of-sight position Pₜ₊₁ (xₜ₊₁, yₜ₊₁) (here, P₂ (x₂, y₂)) on the screen of the display 12 from the line-of-sight detection device 16. After step S14, it is assumed that step S16 is executed after a certain time period has elapsed (for example, a time period that is desired to complete return sweep by the user (about tens of to hundreds of milliseconds)).

After that, in step S18, the eye tracking unit 30 calculates a positional relationship "dₜ=xₜ₊₁-xₜ" that is related to an X-axis direction (direction in which the document is to be read) of Pₜ (xₜ, yₜ) and Pₜ₊₁ (xₜ₊₁, yₜ₊₁). Here, the eye tracking unit 30 calculates a positional relationship "d₁ = x₂ - x₁". When the line-of-sight position moves forward during sentence reading, the positional relationship dₜ becomes a positive value. When the line-of-sight position moves backward during sentence reading, the positional relationship dₜ becomes a negative value. That is, the eye tracking unit 30 also detects a movement direction of the line-of-sight by calculating the positional relationship dₜ. In step S18, a distance between two points for the X-axis direction is calculated as the positional relationship, but a vector or the like may be calculated instead of the distance.

After that, in step S20, the reading time acquisition unit 31 determines whether or not the positional relationship dₜ is less than -C. Here, -C means the distance of movement of the line-of-sight estimated to have performed a return sweep. When "NO" is determined in step S20, that is, when the user's line-of-sight has not performed a return sweep, the flow proceeds to step S24. On the other hand, when "YES" is determined in step S20, that is, when the user's line-of-sight has performed a return sweep, the flow proceeds to step S22.

If the flow proceeds to step S22, the reading time acquisition unit 31 records the reading time of the N-th line in the reading time variance DB 41 in FIG. 6, and the flow proceeds to step S24. Here, it is possible to obtain the reading time of the N-th line by subtracting the total of all the reading time (all the reading time from the first line to the (N - 1)-th line) stored in the reading time variance DB 41 from the measurement time of the timer.

When the flow proceeds to step S24, the reading time acquisition unit 31 determines whether or not the end button has been pressed. When "No" is determined in step S24, the flow proceeds to step S26. Similar to step S10, in step S24, it may be determined whether or not a further predetermined input is performed, or it may be determined whether or not information by which completion of reading of the document may be estimated is obtained. As the information by which completion of reading of the document may be estimated, for example, information that indicates that the line-of-sight position exists near the end position of the electronic document, and information that the number of lines (N) that are read by the user has reached all the number of lines (L) of the electronic document, and the like are assumed.

In step S26, the eye tracking unit 30 increments the value t by 1 (t = t + 1), and increments N by 1 (N = N + 1). After that, the eye tracking unit 30 and the reading time acquisition unit 31 repeat the processing and determination in steps S16 to S26 so as to record the reading time of each line of the electronic document into the reading time variance DB 41. When "Yes" is determined in step S24, all the processing in FIG. 5 is terminated.

### [Processing of the tendency calculation unit 33]

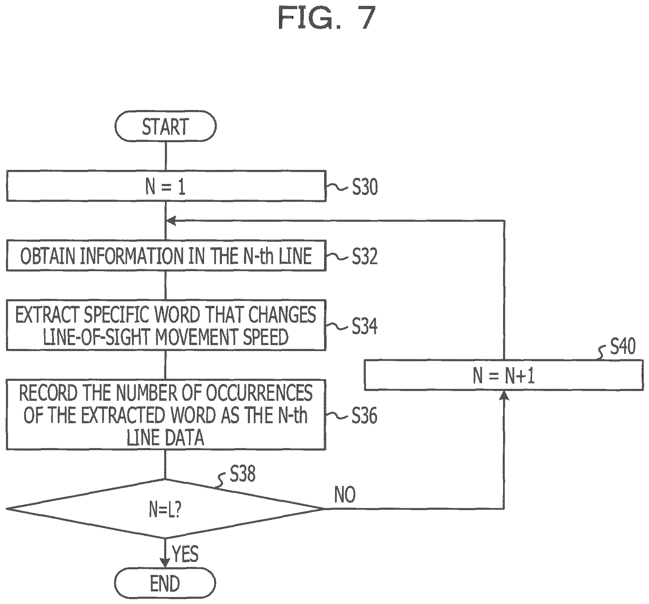

FIG. 7 illustrates processing of the tendency calculation unit 33 by a flowchart. The processing in FIG. 7 is for example, the processing that is started at the timing when "Yes" is determined in step S10 in FIG. 5, and at the timing when "Yes" is determined in step S24, and the like.

In the processing in FIG. 7, first, in step S30, the tendency calculation unit 33 sets the value N indicating the number of lines to 1. Next, in step S32, the tendency calculation unit 33 obtains information of the N-th line (all the character strings). Next, in step S34, the tendency calculation unit 33 refers to the specific word table 42, and extracts specific words (words that changes (reduces) the movement speed of the user's line-of-sight) from all the character strings in the N-th line. In this regard, if a same specific word comes up two times or more in an electronic document, it is highly possible that the specific word in the second time and after will not change the movement speed of the user's line-of-sight. Accordingly, the tendency calculation unit 33 may store specific words that are existent in each line, and may not count the stored specific words at the second occurrence and after that.

In step S36, the tendency calculation unit 33 records the number of extracted words (number of occurrences) into the specific word occurrence number DB 43 as the N-th line data.

In step S38, the tendency calculation unit 33 determines whether or not N matches L, the number of all the lines of the electronic document. When "No" is determined, here, the flow proceeds to step S40, the tendency calculation unit 33 increments N by 1 (N = N + 1), and the flow proceeds to step S32. After that, the processing and determination in steps S32 to S40 are repeated until "Yes" is determined in step S38. And when "Yes" is determined in step S38, that is, when the numbers of occurrences of the specific words in all the lines are stored in the specific word occurrence number DB 43, all the processing in FIG. 7 is terminated.

### [Processing of the determination unit 32]

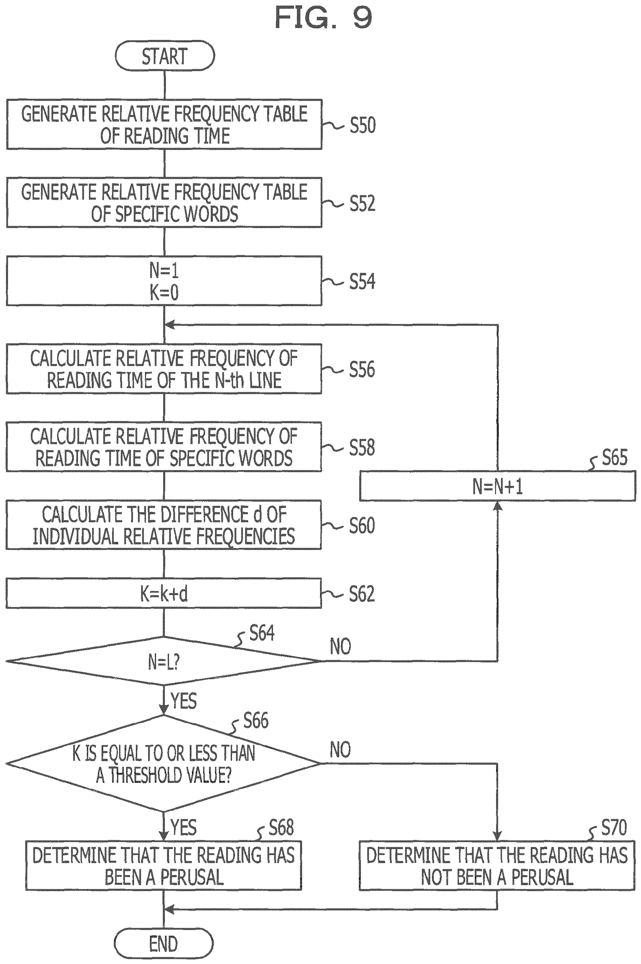

FIG. 9 illustrates a flowchart of processing of the determination unit 32. The processing in FIG. 9 is the processing to be started after both of the processing in FIG. 5 and FIG. 7 are terminated.

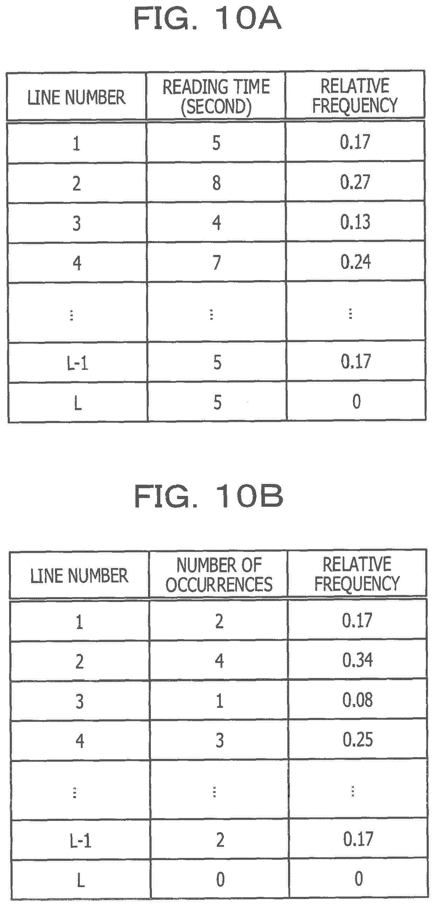

In the processing in FIG. 9, first, in step S50, the determination unit 32 generates a relative frequency table of the reading time. Specifically, as illustrated in FIG. 10A, the determination unit 32 generates the relative frequency table of the reading time, which has been produced by providing the reading time variance DB41 in FIG. 6 with a relative frequency field. In this regard, at the time of processing in step S50, it is assumed that the relative frequency fields are blank fields.

In step S52, the determination unit 32 generates the relative frequency table of specific words. Specifically, as illustrated in FIG. 10B, the determination unit 32 generates the relative frequency table of the specific words, which has been produced by providing the specific word occurrence number DB 43 in FIG. 8B with the relative frequency field. In this regard, at the time of processing in step S52, it is assumed that the relative frequency fields are blank fields. In this regard, the processing order in steps S50 and S52 may be the opposite.

In step S54, the determination unit 32 sets the N indicating the number of lines to 1, and sets the value K indicating the total value of the differences of the relative frequencies to 0.

In step S56, the determination unit 32 calculates a relative frequency of the reading time of the N-th line. Here, it is assumed that the relative frequency of the reading time in the N-th line is a ratio of the reading time of the N-th line to all the reading time. For example, it is assumed that when N = 1 (in the case of the first line), "0.17" illustrated in FIG. 10A is calculated as a relative frequency.

In step S58, the determination unit 32 calculates a relative frequency of the number of occurrences of the specific words in the N-th line. Here, it is assumed that the relative frequency of the number of occurrences of the specific words in the N-th line is a ratio of the number of occurrences of the specific words in the N-th line to the number of occurrences in the entire document. For example, when N = 1 (in the case of the first line), "0.17" illustrated in FIG. 10B has been calculated as the relative frequency. In this regard, the processing order in steps S56 and S58 may be the opposite. In the present embodiment, in order to make it possible to compare different scales of the reading time of each line, and the number of occurrences of the specific words in each line, normalization is performed using the relative frequency.

In step S60, the determination unit 32 calculates the difference d between the individual relative frequencies calculated in steps S56 and S58, respectively. When N = 1 (in the case of the first line), d = 0.17 - 0.17 = 0 is calculated.

In step S62, the determination unit 32 adds the difference d to K (K = K + d).

In step S64, the determination unit 32 determines whether N = L or not. That is, the determination unit 32 determines whether or not the processing in steps S56 to S64 has been performed until the L line. When "No" is determined here, the flow proceeds to step S65, N is incremented by 1 (N = N + 1), and the processing returns to step S56. After that, the processing and determination in steps S56 to S65 are repeated. When "Yes" is determined in step S64, that is, in step S62, when the sum total of the differences d of the relative frequencies of all the lines is obtained, the flow proceeds to step S66.

When the flow proceeds to step S66, the determination unit 32 determines whether or not "K" is a predetermined threshold value or less. It is thought that the smaller the value of "K", the more similar the distribution of the reading time in each line, and the distribution of the specific words in each line become. Accordingly, it is assumed that the threshold value here is about a value allowing a determination that variation of reading time and the variation of the number of occurrences of the specific words are similar. When "Yes" is determined in step S66, the flow proceeds to step S68, and else when "No" is determined, the flow proceeds to step S70.

When the flow proceeds to step S68, that is, when "K" is the threshold value or less, the determination unit 32 determines that the user has perused the electronic document. In addition, when the flow proceeds to step S70, the determination unit 32 determines that the user has not perused the electronic document.

The determination result of the determination unit 32 is transmitted to the notification unit 34. The notification unit 34 may display the determination result on the display 12. Instead of the display, for example, voice may be output using a speaker that is not illustrated. In addition, the determination result of the determination unit 32 may be used for processing other than notification. For example, display control may be performed depending on the determination result of the determination unit 32 so that a next content or electronic document is not allowed to be displayed when the user has not perused the electronic document. In addition, for example, control may be performed depending on the determination result of the determination unit 32 so that a certain button is not allowed to be pressed. In addition, the determination results of the determination unit 32 may be collected, and statistics may be taken whether or not the user who uses the content peruses the electronic document.

As described above in detail, by the present embodiment, the eye tracking unit 30 detects the movement direction of the line-of-sight of the user reading an electronic document. The reading time acquisition unit 31 obtains time to be spent by the user to read each line of the electronic document based on the detection result of the eye tracking unit 30. The determination unit 32 determines whether or not the user has perused the electronic document based on the total of the differences between relative frequencies of the reading time in individual lines, and the relative frequencies of the number of occurrences (factors influencing the reading time of each line) of the specific words, that is, a correlation between the variation in reading time of each line, and the variation of the number of occurrences of the specific words. Thereby, when the characteristic (the number of occurrences of the specific words in each line) of the electronic document is reflected on the reading time of each line, it is possible to determine that the user has perused the electronic document. Thus it is possible to determine the perusal by the user with high precision.

In the above-described embodiment, a description has been given of the case where the reading time of each line is determined by a time period produced by subtracting the total of the entire reading time (the entire reading time from the first line to the (N - 1)-th line) stored in the reading time variance DB 41 from the measurement time of the timer. However, the present disclosure is not limited to this. For example, after "Yes" is determined in step S20 in FIG. 5, the timer may be stopped, and the timer may be started in step S26. In this case, the measurement time of the timer directly becomes the reading time of each line.

### [Modification]

In the above-described embodiment, for the sake of convenience, a description has been given of the case where the number of characters in each line is fixed. However, in an electronic document, the number of characters in each line is often not fixed. In particular, the number of characters in the line of the closing paragraph sometimes includes only a few characters. In such a case, the tendency calculation unit 33 may create the relative frequency table of specific words in consideration of the number of characters in each line.

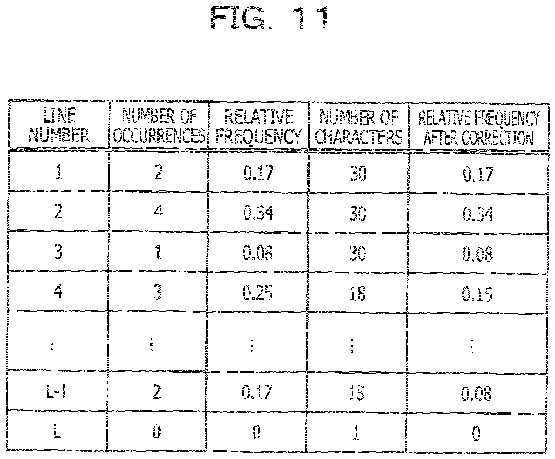

FIG. 11 illustrates an example of a relative frequency table of specific words according to the present variation. The relative frequency table of the specific words in FIG. 11 is produced by adding fields of the "number of characters" and the "relative frequency after correction" to the relative frequency table in FIG. 10B. The number of characters in each line is stored in the field of the "number of characters". The product of the number of characters in each line divided by the maximum number of characters in one line (30 characters), and the relative frequency is stored in the field of the "after correction relative frequency".

In this case, the determination unit 32 compares the relative frequency of the reading time in FIG. 10A, and the relative frequency of the specific words after correction in FIG. 11 for each line (calculates the difference d). If the total of the differences d is equal to or less than the threshold value, a determination ought to be made that the user has perused. In this manner, it becomes possible to determine with high precision whether the user has perused or not based on the number of specific words in each line and the number of characters.

In the above-described embodiment and modification, if variation of the reading time of each line is greater than the predetermined variation, a determination may be made that the user has perused. In this manner, it is possible to determine with precision that the user has not skimmed (there is a high possibility that the reading time of each line becomes substantially fixed) (has perused). In this regard, for variation of reading time of each line, for example, a value produced by totaling the differences between the average of the reading time of each line and the reading time of each line for all the lines may be employed. If that value is higher than the predetermined threshold value, the user may be determined to have perused.

In the above-described embodiment and modification, a description has been given of the case where the specific words reduce the movement speed of the user's line-of-sight. However, the present disclosure is not limited to this. The specific words may be words (for example, words capable of being skimmed through) that increase the movement speed of the user's line-of-sight. It is assumed that the words that increase the movement speed of the user's line-of-sight are ellipses "...", words that occur repetitively, and the like. In the above-described embodiment, in the case of considering a word that increases the movement speed of the user's line-of-sight, the tendency calculation unit 33 ought to subtract the number of occurrences of the words that increase the movement speed of the user's line-of-sight from the number of occurrences of the words that reduce the movement speed of the user's line-of-sight, and may store the difference into the specific word occurrence number DB 43 in FIG. 8B.

In the above-described embodiment and modification, a description has been given of the case where as a method of determining whether there is a correlation between the reading time and the number of occurrences of specific words, a determination is made of whether the total of the differences of the relative frequencies of the individual lines is a threshold value or less. However, the present disclosure is not limited to this. That is, a determination may be made of whether there is a correlation between the reading time and the number of occurrences of specific words using a method of the other statistics processing, and the like.

In the above-described embodiment and modification, a description has been given of the case where the number of occurrences of specific words is used as a factor of influencing the reading time of each line. However, in combination with this, or in place of this, information of whether a same character type, such as a Japanese hiragana, a Chinese character, or the like continues for a predetermined number or more may be used as a factor influencing the reading time of each line.

In each of the above-described embodiments and modification, the case is described in which the electronic document corresponds to horizontal writing, but the embodiment is not limited to such a case, and the electronic document may correspond to vertical writing. Even in the case of the vertical writing, it may be accurately determined whether or not the user has perused the electronic document by executing processing that is similar to the processing in each of the above-described embodiments.

The processing that is described in each of the above-described embodiments and modification may be executed by a further information processing device (server or the like) that is connected to the information processing device 10 through a network.

The above-described processing function may be obtained by a computer. In that case, there is provided a program in which a processing content of a function that is to be included in a processing device is described. By executing the program through the computer, the above-described processing function is achieved on the computer. The program in which the processing content is described may be recorded to a computer readable recording medium (here, carrier waves are excluded).

When the program is distributed, for example, the program is sold in the form of a portable recording medium such as a digital versatile disc (DVD) and a compact disc read only memory (CD-ROM) to which the program is recorded. In addition, the program may be stored in a storage device of a server computer, and the program may be transferred from the server computer to a further computer through a network.

The computer that executes a program stores, for example, a program that is recorded to the portable recording medium or a program that is transferred from the server computer, in the storage device of the computer. In addition, the computer reads the program from the storage device, and executes processing in accordance with the program. The computer may read the program from the portable recording medium directly, and execute the processing in accordance with the program. In addition, the computer may execute the processing in accordance with the read program each time the program is transferred from the server computer.

## Claims

1. A perusing determination device (10) including a computer processor (90), the device comprising:
an eye tracking unit (30) configured to detect a movement direction of a line-of-sight of a user reading a document;
a reading time acquisition unit (31) configured to measure time for the user to read each line of the document based on a detection result of the eye tracking unit; and
a determination unit (32) configured to make a determination of whether the user has perused the document based on variation of time for reading each line,
**characterized by**:
the determination unit (32) is configured to calculate a relative frequency of the number of occurrences of specific words per line, where the relative frequency of the number of occurrences of the specific words in a line is a ratio of the number of occurrences of the specific words in that line to the number of occurrences in the document;
the determination unit (32) is configured to determine whether or not a value K is a predetermined threshold value or less, the value K being calculated based on the measured times and the relative frequencies of the number of occurrences of the specific words per line to indicate whether the variation of time for reading each line and a variation of the number of occurrences of the specific words for each line are similar, and such that the smaller the value of K the more similar the distribution of the time for reading each line and the distribution of the number of occurrences of the specific words for each line; and
the determination unit (32) is configured, when the value K is the threshold value or less, to determine that the user has perused the document, and when the value K is greater than the threshold value, to determine that the user has not perused the document.

2. The perusing determination device (10) according to claim 1,
wherein the determination unit (32) is configured to determine whether the user is perusing or not based on a correlation between the variation of time for reading each line and the variation of the number of occurrences of the specific words for each line.

3. The perusing determination device (10) according to claim 2,
wherein the specific words are words determined to cause a change in a movement speed of a line-of-sight of the user.

4. The perusing determination device (10) according to any of the preceding claims,
wherein the determination unit (32) is configured to take into consideration of a number of characters of each line in the determination.

5. A method of determining a perusal in a perusing determination device (10), the method comprising:
detecting a movement direction of a line-of-sight of a user reading a document;
measuring time for the user to read each line of the document based on a detection result of the detecting; and
determining whether the user has perused the document based on variation of time for reading each line, **characterized by**:
calculating a relative frequency of the number of occurrences of specific words per line, where the relative frequency of the number of occurrences of the specific words in a line is a ratio of the number of occurrences of the specific words in that line to the number of occurrences in the document;
determining whether or not a value K is a predetermined threshold value or less, the value K being calculated based on the measured times and the relative frequencies of the number of occurrences of the specific words per line to indicate whether the variation of time for reading each line and a variation of the number of occurrences of the specific words for each line are similar, and such that the smaller the value of K the more similar the distribution of the time for reading each line and the distribution of the number of occurrences of the specific words for each line; and
when the value K is the threshold value or less, determining that the user has perused the document, and when the value K is greater than the threshold value, determining that the user has not perused the document.

6. The method according to claim 5,
wherein the determining comprises determining whether the user is perusing or not based on a correlation between the variation of time for reading each line and the variation of the number of occurrences of the specific words for each line.

7. The method according to claim 6,
wherein the specific words are words determined to cause a change in a movement speed of a line-of-sight of the user.

8. The method according to any of claims 5 to 7,
wherein the determining is performed in consideration of a number of characters of each line.

9. A perusal determination program configured to cause a computer (10) to execute a process, the process comprising the method of any of claims 5 to 8.

10. A computer-readable storage medium (92; 94; 96; 99; 91) storing a perusal determination program according to claim 9.

## Patentansprüche

1. Vorrichtung (10) zum Bestimmen des sorgfältigen Durchlesens, die einen Computerprozessor (90) umfasst, wobei die Vorrichtung Folgendes umfasst:
eine Blickregistrierungseinheit (30), die ausgestaltet ist, um eine Bewegungsrichtung einer Sichtlinie eines Benutzers zu ermitteln, der ein Dokument liest;
eine Lesezeit-Erfassungseinheit (31), die ausgestaltet ist, um die Zeit für den Benutzer zum Lesen jeder Zeile des Dokuments basierend auf einem Ermittlungsergebnis der Blickregistrierungseinheit zu messen; und
eine Bestimmungseinheit (32), die ausgestaltet ist, um eine Bestimmung, ob der Benutzer das Dokument sorgfältig durchgelesen hat, basierend auf der Veränderung der Zeit zum Lesen jeder Zeile vorzunehmen,
**dadurch gekennzeichnet, dass**:
die Bestimmungseinheit (32) ausgestaltet ist, um eine relative Häufigkeit der Anzahl der Vorkommnisse spezifischer Wörter pro Zeile zu berechnen, wobei die relative Häufigkeit der Anzahl der Vorkommnisse der spezifischen Wörter in einer Zeile ein Verhältnis der Anzahl der Vorkommnisse der spezifischen Wörter in dieser Zeile zur Anzahl der Vorkommnisse in dem Dokument ist;
wobei die Bestimmungseinheit (32) ausgestaltet ist, um zu bestimmen, ob ein Wert K ein vorbestimmter Schwellenwert oder weniger ist oder nicht, wobei der Wert K basierend auf den gemessenen Zeiten und den relativen Häufigkeiten der Anzahl der Vorkommnisse der spezifischen Wörter pro Zeile berechnet wird, um anzugeben, ob die Veränderung bei der Zeit zum Lesen jeder Zeile und eine Veränderung der Anzahl der Vorkommnisse der spezifischen Wörter für jede Zeile ähnlich sind, und derart, dass, je kleiner der Wert von K ist, desto ähnlicher die Verteilung der Zeit zum Lesen jeder Zeile und die Verteilung der Anzahl der Vorkommnisse der spezifischen Wörter für jede Zeile sind; und
die Bestimmungseinheit (32) ausgestaltet ist, um, wenn der Wert K der Schwellenwert oder weniger ist, zu bestimmen, dass der Benutzer das Dokument sorgfältig durchgelesen hat, und
wenn der Wert K größer als der Schwellenwert ist, zu bestimmen, dass der Benutzer das Dokument nicht sorgfältig durchgelesen hat.

2. Vorrichtung (10) zum Bestimmen des sorgfältigen Durchlesens nach Anspruch 1,
wobei die Bestimmungseinheit (32) ausgestaltet ist, um basierend auf einer Korrelation zwischen der Veränderung der Zeit zum Lesen jeder Zeile und der Veränderung der Anzahl der Vorkommnisse der spezifischen Wörter für jede Zeile zu bestimmen, ob der Benutzer sorgfältig durchliest oder nicht.

3. Vorrichtung (10) zum Bestimmen des sorgfältigen Durchlesens nach Anspruch 2,
wobei die spezifischen Wörter Wörter sind, die bestimmt werden, um eine Änderung bei der Bewegungsgeschwindigkeit einer Sichtlinie des Benutzers zu bewirken.

4. Vorrichtung (10) zum Bestimmen des sorgfältigen Durchlesens nach einem der vorhergehenden Ansprüche,
wobei die Bestimmungseinheit (32) ausgestaltet ist, um eine Anzahl von Zeichen von jeder Zeile bei der Bestimmung zu berücksichtigen.

5. Verfahren zum Bestimmen eines sorgfältigen Durchlesens in einer Vorrichtung (10) zum Bestimmen des sorgfältigen Durchlesens, wobei das Verfahren Folgendes umfasst:
Ermitteln einer Bewegungsrichtung einer Sichtlinie eines Benutzers, der ein Dokument liest;
Messen der Zeit für den Benutzer zum Lesen jeder Zeile des Dokuments basierend auf einem Ermittlungsergebnis des Ermittelns; und
Bestimmen, ob der Benutzer das Dokument sorgfältig durchgelesen hat, basierend auf der Veränderung der Zeit zum Lesen jeder Zeile,
**gekennzeichnet durch**:
Berechnen einer relativen Häufigkeit der Anzahl der Vorkommnisse spezifischer Wörter pro Zeile, wobei die relative Häufigkeit der Anzahl der Vorkommnisse der spezifischen Wörter in einer Zeile ein Verhältnis der Anzahl der Vorkommnisse der spezifischen Wörter in dieser Zeile zur Anzahl der Vorkommnisse in dem Dokument ist;
Bestimmen, ob ein Wert K ein vorbestimmter Schwellenwert oder weniger ist oder nicht, wobei der Wert K basierend auf den gemessenen Zeiten und den relativen Häufigkeiten der Anzahl der Vorkommnisse der spezifischen Wörter pro Zeile berechnet wird, um anzugeben, ob die Veränderung bei der Zeit zum Lesen jeder Zeile und eine Veränderung der Anzahl der Vorkommnisse der spezifischen Wörter für jede Zeile ähnlich sind, und derart, dass, je kleiner der Wert von K ist, desto ähnlicher die Verteilung der Zeit zum Lesen jeder Zeile und die Verteilung der Anzahl der Vorkommnisse der spezifischen Wörter für jede Zeile sind; und
wenn der Wert K der Schwellenwert oder weniger ist, Bestimmen, dass der Benutzer das Dokument sorgfältig durchgelesen hat, und wenn der Wert K größer als der Schwellenwert ist, Bestimmen, dass der Benutzer das Dokument nicht sorgfältig durchgelesen hat.

6. Verfahren nach Anspruch 5,
wobei das Bestimmen das Bestimmen, ob der Benutzer sorgfältig durchliest oder nicht, basierend auf einer Korrelation zwischen der Veränderung der Zeit zum Lesen jeder Zeile und der Veränderung der Anzahl der Vorkommnisse der spezifischen Wörter für jede Zeile umfasst.

7. Verfahren nach Anspruch 6,
wobei die spezifischen Wörter Wörter sind, die bestimmt werden, um eine Änderung bei der Bewegungsgeschwindigkeit einer Sichtlinie des Benutzers zu bewirken.

8. Verfahren nach einem der Ansprüche 5 bis 7,
wobei das Bestimmen unter Berücksichtigung einer Anzahl von Zeichen von jeder Zeile durchgeführt wird.

9. Programm zum Bestimmen des sorgfältigen Durchlesens, das ausgestaltet ist, um zu bewirken, dass ein Computer (10) einen Prozess ausführt, wobei der Prozess das Verfahren nach einem der Ansprüche 5 bis 8 umfasst.

10. Maschinenlesbarer Datenträger (92; 94; 96; 99; 91), der ein Programm zum Bestimmen des sorgfältigen Durchlesens nach Anspruch 9 speichert.

## Revendications

1. Dispositif de détermination de lecture attentive (10) comprenant un processeur informatique (90), le dispositif comprenant :
une unité de suivi du regard (30) configurée pour détecter une direction de mouvement d'une ligne visuelle d'un utilisateur en train de lire un document ;
une unité d'acquisition de temps de lecture (31) configurée pour mesurer le temps pris par l'utilisateur pour lire chaque ligne du document sur la base d'un résultat de détection de l'unité de suivi du regard ; et
une unité de détermination (32) configurée pour déterminer si oui ou non l'utilisateur a lu attentivement le document sur la base d'une variation du temps pour lire chaque ligne,
**caractérisé par** :
l'unité de détermination (32) est configurée pour calculer une fréquence relative du nombre d'occurrences de mots spécifiques par ligne, où la fréquence relative du nombre d'occurrences des mots spécifiques dans une ligne est un rapport entre le nombre d'occurrences des mots spécifiques dans cette ligne et le nombre d'occurrences dans le document ;
l'unité de détermination (32) est configurée pour déterminer si oui ou non une valeur K est égale ou inférieure à une valeur seuil prédéterminée, la valeur K étant calculée sur la base des temps mesurés et des fréquences relatives du nombre d'occurrences des mots spécifiques par ligne pour indiquer si oui ou non la variation du temps pour lire chaque ligne et une variation du nombre d'occurrences des mots spécifiques pour chaque ligne sont similaires, et de sorte que plus la valeur K est faible, plus la distribution du temps pour lire chaque ligne et la distribution du nombre d'occurrences des mots spécifiques pour chaque ligne sont similaires ; et
l'unité de détermination (32) est configurée, lorsque la valeur K est égale ou inférieure à la valeur seuil, pour déterminer que l'utilisateur a lu attentivement le document, et lorsque la valeur K est supérieure à la valeur seuil, pour déterminer que l'utilisateur n'a pas lu attentivement le document.

2. Dispositif de détermination de lecture attentive (10) selon la revendication 1,
dans lequel l'unité de détermination (32) est configurée pour déterminer si oui ou non l'utilisateur lit attentivement ou non sur la base d'une corrélation entre la variation du temps pour lire chaque ligne et la variation du nombre d'occurrences des mots spécifiques pour chaque ligne.

3. Dispositif de détermination de lecture attentive (10) selon la revendication 2,
dans lequel les mots spécifiques sont des mots déterminés pour provoquer un changement d'une vitesse de mouvement d'une ligne visuelle de l'utilisateur.

4. Dispositif de détermination de lecture attentive (10) selon l'une quelconque des revendications précédentes,
dans lequel l'unité de détermination (32) est configurée pour prendre en considération un nombre de caractères de chaque ligne dans la détermination.

5. Procédé de détermination d'une lecture attentive dans un dispositif de détermination de lecture attentive (10), le procédé comprenant :
la détection d'une direction de mouvement d'une ligne visuelle d'un utilisateur en train de lire un document ;
la mesure du temps pris par l'utilisateur pour lire chaque ligne du document sur la base d'un résultat de détection de la détection ; et
la détermination si oui ou non l'utilisateur a lu attentivement le document sur la base d'une variation de temps pour lire chaque ligne,
**caractérisé par** :
le calcul d'une fréquence relative du nombre d'occurrences de mots spécifiques par ligne, où la fréquence relative du nombre d'occurrences des mots spécifiques dans une ligne est un rapport entre le nombre d'occurrences des mots spécifiques dans cette ligne et le nombre d'occurrences dans le document ;
la détermination si oui ou non une valeur K est égale ou inférieure à une valeur seuil prédéterminée, la valeur K étant calculée sur la base des temps mesurés et des fréquences relatives du nombre d'occurrences des mots spécifiques par ligne pour indiquer si oui ou non la variation du temps pour lire chaque ligne et une variation du nombre d'occurrences des mots spécifiques pour chaque ligne sont similaires, et de sorte que plus la valeur K est faible, plus la distribution du temps pour lire chaque ligne et la distribution du nombre d'occurrences des mots spécifiques pour chaque ligne sont similaires ; et
lorsque la valeur K est égale ou inférieure à la valeur seuil, la détermination que l'utilisateur a lu attentivement le document, et lorsque la valeur K est supérieure à la valeur seuil, la détermination que l'utilisateur n'a pas lu attentivement le document.

6. Procédé selon la revendication 5,
dans lequel la détermination comprend la détermination si oui ou non l'utilisateur lit attentivement ou non sur la base d'une corrélation entre la variation du temps pour lire chaque ligne et la variation du nombre d'occurrences des mots spécifiques pour chaque ligne.

7. Procédé selon la revendication 6,
dans lequel les mots spécifiques sont des mots déterminés pour provoquer un changement d'une vitesse de mouvement d'une ligne visuelle de l'utilisateur.

8. Procédé selon l'une quelconque des revendications 5 à 7,
dans lequel la détermination est réalisée en prenant en compte un nombre de caractères de chaque ligne.

9. Programme de détermination de lecture attentive configuré pour amener un ordinateur (10) à exécuter un processus, le processus comprenant le procédé selon l'une quelconque des revendications 5 à 8.

10. Support de stockage lisible par ordinateur (92 ; 94 ; 96 ; 99 ; 91) stockant un programme de détermination de lecture attentive selon la revendication 9.
